# EUROPÄISCHE PATENTSCHRIFT

(11) **EP 3 627 028 B1**
(45) Veröffentlichungstag und Bekanntmachung des Hinweises auf die Patenterteilung: **26.10.2022**
(21) Anmeldenummer: 18195147.6
(22) Anmeldetag: 18.09.2018
(51) Int. Cl.: F16L 19/00, F16B 39/00, F16L 15/08

(54) **FITTING**
FITTING
RACCORD

(43) Veröffentlichungstag der Anmeldung: 25.03.2020
(73) Patentinhaber: Geberit International AG, 8645 Jona (CH)
(72) Erfinder: GRAF, Pascal, 8132 Jona (CH); KONIECZKA, Damian, 8645 Jona (CH)
(74) Vertreter: Frischknecht, Harry Ralph

(56) Entgegenhaltungen:
- WO-A1-2018/130357
- DE-A1- 2 813 494
- DE-A1- 3 709 819
- FR-E- 79 036
- US-A- 3 425 314

## Beschreibung

### TECHNISCHES GEBIET

Die vorliegende Erfindung betrifft ein Fitting mit einer Kupplungseinheit nach dem Anspruch 1.

### STAND DER TECHNIK

Fittings zur Verbindung von zwei wasserführenden Rohrteilen sind aus dem Stand der Technik bekannt. Beispielsweise sind Klemmfittings bekannt.

Aus der WO 99/51907 ist ein Fitting bekannt geworden. Auf einer Seite des Fittings kann ein Rohr fest angeschlossen werden. Auf der anderen Seite des Fittings kann ein Rohr oder eine Armatur lösbar angeschlossen werden. Der Anschluss des Rohrs bzw. des Fittings ist aufwändig, da ein Dichtmittel zwischen Rohr und Fitting eingesetzt werden muss. Das Dichtmittel ist beispielsweise ein Teflonband oder eine Hanfdichtung. Ein weiterer bekannter Fitting ist aus der WO 2018/130357 bekannt, welche eine Sicherungseinrichtung zur Verhinderung eines Lösens der Schraubverbindung offenbart.

### DARSTELLUNG DER ERFINDUNG

Ausgehend von diesem Stand der Technik liegt der Erfindung eine Aufgabe zugrunde, ein Fitting anzugeben, welches die Nachteile des Standes der Technik überwindet. Besonders bevorzugt soll ein Fitting angeben werden, welches bezüglich seiner mechanischer Verbindung mit einem Rohrabschnitt verbesserte Eigenschaften aufweist.

Diese Aufgabe löst der Gegenstand von Anspruch 1. Demgemäss umfasst ein Fitting einen Fittingkörper mit einem Fluiddurchgang, einem ersten Rohrstutzen zum Anschluss eines ersten Rohrabschnittes und einem zweiten Rohrstutzen zum Anschluss eines zweiten Rohrabschnittes mit einem Aussengewinde und eine am zweiten Rohrstutzen angeordnete Kupplungseinheit zur lösbaren Verbindung des zweiten Rohrabschnittes mit dem zweiten Rohrstutzen. Mit der Kupplungseinheit lässt sich der zweite Rohrabschnitt mit dem zweiten Rohrstutzen verbinden. Die Kupplungseinheit umfasst eine am Fittingkörper verschwenkbar gelagerte Überwurfmutter mit einem zylindrischen Innenraum, der durch eine Innenfläche begrenzt ist. Der Innenraum umgibt den zweiten Rohrstutzen derart, dass zwischen Innenraum und Rohrstutzen ein Aufnahmeraum für den zu verbindenden zweiten Rohrabschnitt geschaffen wird. An der Innenfläche ist ein Innengewinde angeordnet, welches mit dem Aussengewinde des zweiten Rohrabschnittes in Eingriff bringbar ist. Bei der Herstellung der Verbindung zwischen dem zweiten Rohrabschnitt und dem zweiten Rohrstutzen wird die Überwurfmutter relativ zum Fitting verschwenkt, wodurch das Innengewinde mit dem Aussengewinde in Eingriff bringbar ist und wodurch der Fittingkörper mit dem Rohrabschnitt verbindbar ist. Auf dem zweiten Rohrstutzen ist aussenseitig ein Dichtelement angeordnet, welches mit der Innenseite des zweiten Rohrabschnittes zusammenwirkt. Mit dem Dichtelement wird eine bezüglich Fluiden dichte Verbindung bereitgestellt. Die Kupplungseinheit umfasst weiter
- ein Sicherungselement, welches eine Drehhemmung zwischen dem zweiten Rohrabschnitt und der Überwurfmutter gegen eine Lösebewegung der Überwurfmutter bereitstellt; und
- ein Drehmomentbegrenzungselement, welches das auf die Überwurfmutter während der Montage aufgebrachte Drehmoment begrenzt.

Das Sicherungselement weist den Vorteil auf, dass die Verbindung zwischen dem Rohrabschnitt und der Überwurfmutter gesichert wird. Beim Lösen dieser Verbindung muss eine Kraft aufgebracht werden, welche die Drehhemmung überwindet. Durch das Sicherungselement wird insbesondere ein unbeabsichtigtes Lösen verhindert.

Das Drehmomentbegrenzungselement hat den Vorteil, dass die Beaufschlagung der Überwurfmutter mit einem zu hohen Drehmoment verhindert werden kann. Dies ist insbesondere bei der Montage ein Vorteil. Wenn beispielsweise ein Verkanten zwischen dem Fitting und dem zweiten Rohranschluss vorliegt, so wird der Installateur typischerweise versuchen, die Kraft auf die Überwurfmutter zu erhöhen. Ohne Drehmomentbegrenzungselement führt diese Krafterhöhung zu einer Fehlmontage. Auch kommt es zu Fehlmontagen, wenn nach bereits erfolgter Montage die Überwurfmutter weiter gedreht wird. Auch hier kommt das Drehmomentbegrenzungselement zum Einsatz und verhindert ein Weiterdrehen.

Das Sicherungselement und das Drehmomentbegrenzungselement haben also den Vorteil, dass die Verbindung zwischen der Überwurfmutter bei dessen Herstellung und/oder nach erfolgter Herstellung geschützt wird.

Unter der Ausdrucksweise "Rohrabschnitt" wird ein Endbereich eines Rohrs oder eines weiteren Fittings verstanden. Ein mit dem Fitting zu verbindendes Rohr oder ein weiterer Fitting weist einen entsprechenden Rohrabschnitt auf.

Die beiden Rohrstutzen des Fittingkörpers verlaufen typischerweise kollinear zueinander.

Es wäre auch denkbar, dass die beiden Rohrstutzen winklig geneigt zueinander verlaufen.

Das Sicherungselement ist vorzugsweise ein an der Überwurfmutter gelagertes Element aus Kunststoff, insbesondere weichem Kunststoff, oder aus Gummi. Der zweite Rohrabschnitt ist in Kontakt mit dem Sicherungselement bringbar. Durch die Ausbildung aus den genannten Materialien wird die Reibung zwischen der Überwurfmutter und dem zweiten Rohrabschnitt erhöht. Bei einem Lösen der Überwurfmutter muss diese Reibung entsprechend überwunden werden.

Das Sicherungselement erstreckt sich bevorzugt entweder teilweise oder vollständig um den zweiten Rohrstutzen bzw. um den Innenraum herum. Je nach Ausbildung kann der Grad der Reibungserhöhung eingestellt werden. Besonders bevorzugt ist das Sicherungselement ringförmig ausgebildet und läuft vollständig um den zweiten Rohrstutzen herum. Die Ausdehnung des Sicherungselements in Richtung der Mittelachse des Rohrstutzens gesehen ist aber kleiner als diejenige des Rohrstutzens.

Vorzugsweise ist Sicherungselement in einer sich von der Innenfläche in die Überwurfmutter hineinerstrecken Aufnahmenut angeordnet ist, wobei das Sicherungselement aus der Aufnahmenut in Richtung Aufnahmeraum herausragt. Diese Lagerung hat sich vorteilhaft bei der Montage des Sicherungselementes erwiesen.

Besonders bevorzugt liegt das Sicherungselement in seiner Ausgangslage mit Spiel in der Aufnahmenut. Hierdurch ergeht der Vorteil, dass sich das Sicherungselement bei der Montage des zweiten Rohrabschnittes selber zentrieren kann.

In einer weiteren Variante kann das Sicherungselement aber auch integral an der Überwurfmutter angeformt sein. Beispielsweise über ein Zwei-Komponentenspritzgiessverfahren.

Vorzugsweise ist das Sicherungselement derart ausgebildet und positioniert, dass das Aussengewinde des zweiten Rohrabschnittes mit dem Sicherungselement in Kontakt bringbar ist, bzw. in das Sicherungselement eindrehbar ist. Das heisst, dass sich das Aussengewinde in das Sicherungselement einschneidet. Hierdurch kann ein besonders fester und guter Verbund zwischen Sicherungselement und dem zweiten Rohrabschnitt erreicht werden.

Besonders bevorzugt ist das Sicherungselement derart dimensioniert, dass es zwischen der Aufnahmenut in der Überwurfmutter und dem zweiten Rohrabschnitt, insbesondere dem Aussengewinde des zweiten Rohrabschnittes eingeklemmt wird.

Vorzugsweise ist der Querschnitt der Aufnahmenut bezüglich seiner Form im Querschnitt gesehen komplementär zum Querschnitt des Sicherungselementes.

Besonders bevorzugt ist das Sicherungselement ein Flachring mit einem rechteckigen Querschnitt, wobei die Aufnahmenut ebenfalls einen rechtechkigen Querschnitt aufweist.

Aussenseitig an der Überwurfmutter ist ein Antriebsring angeordnet, wobei das Drehmomentbegrenzungselement zwischen dem Antriebsring und der Überwurfmutter angeordnet ist, und wobei eine Drehbewegung des Antriebsrings über das Drehmomentbegrenzungselement auf die Überwurfmutter übertragbar ist. Durch Manipulation des Antriebsrings wird die Überwurfmutter entsprechend verschwenkt. Dies Ausbildung ist besonders vorteilhaft, da das Drehmomentbegrenzungselement einfach und kostengünstig integriert werden kann.

Der Antriebsring weist aussenseitig vorzugsweise eine Antriebsstruktur, wie Rillen oder ein Aussensechskant auf, so dass der Installateur den Antriebsring von Hand oder mit einem Werkzeug einfach betätigen kann.

Vorzugsweise wird das Drehmomentbegrenzungselement durch aussenseitig an der Überwurfmutter und innenseitig am Antriebsring angeordnete Rasterhebungen und Rastausnehmungen, in welche die Rasterhebungen eingreifen, bereitgestellt. Durch die Form und Anzahl der Resterhebungen bzw. Rastausnehmungen kann die Höhe des maximalen Drehmomentes festgelegt werden. Sobald das maximale Drehmoment überschritten wird, werden die Rasterhebungen aus den Rastausnehmungen herausgleiten und es kommt zu einem Durchrutschen, wobei dann keine weitere Drehbewegung vom Antriebsring auf die Überwurfmutter übertragen werden kann.

Mit anderen Worten kann das Drehmomentbegrenzungselement auch als Rutschkupplung bezeichnet werden.

Die Rastausnehmungen sind vorzugsweise am Antriebsring angeordnet und die Rasterhebungen sind vorzugswiese an der Überwurfmutter angeordnet.

Vorzugsweise ist die Zahl der Rastausnehmungen grösser als die Zahl der Rasterhebungen. Alternativerweise ist die Zahl der Rasterhebungen grösser als die Zahl der Rastausnehmungen.

Vorzugsweise ist zwischen Antriebsring und Überwurfmutter eine Raststruktur vorhanden, welche einer Verdrehung zwischen Antriebsring und Überwurfmutter keinen Widerstand entgegen stellt und welche einer Verschiebung zwischen Antriebsring und Überwurfmutter in Richtung der Mittelachse des zweiten Rohrstutzens einen Widerstand bereitstellt. Über diese Raststruktur ist der Antriebsring an der Überwurfmutter gelagert. Die Raststruktur liegt in Richtung der Mittelachse gesehen beabstandet zum Drehmomentbegrenzungselement.

Der Antriebsring weist einen Hohlraum auf, in welchem die Überwurfmutter platziert ist, wobei der Hohlraum derart ausgebildet ist, dass die Überwurfmutter im Wesentlichen vollständig im Hohlraum liegt. Das heisst, dass von aussen gesehen im Wesentlichen der Antriebsring nicht aber direkt die Überwurfmutter sichtbar ist. Diese Ausbildung hat den Vorteil, dass der Installateur keinen direkten Zugriff auf den Antriebsring hat, wodurch ein direktes Betätigen der Überwurfmutter und somit eine Umgehung des Drehmomentbegrenzungselementes vermieden werden kann.

Vorzugsweise ist der besagte Hohlraum rückseitig durch den quer zum Hohlraum verlaufenden Flanschabschnitt begrenzt. Der Flanschabschnitt liegt an einer Anschlagsfläche an der Überwurfmutter an. Durch den Flanschabschnitt und die Anschlagsfläche kann eine zusätzliche Führung zwischen Überwurfmutter und Antriebsring bereitgestellt werden.

Vorzugsweise weist die Überwurfmutter mindestens ein Schnappelement auf, welches in eine am zweiten Rohrstutzen angeordnete und um den zweiten Rohrstutzen umlaufende Nut eingreift und über das Schnappelement drehbar am zweiten Rohrstutzen gelagert ist. Über den Eingriff zwischen dem Schnappelement und der Nut ist die Überwurfmutter und somit die gesamte Kupplungseinheit am zweiten Rohrabschnitt verschwenkbar gelagert. Vorzugsweise handelt es sich beim Schnappelement um ein endseitig an der Überwurfmutter angeordneter Schnappring, wobei der Schnappring vollständig um die Überwurfmutter umlaufend angeordnet sein kann; oder wobei der Schnappring umfangsseitig mindestens teilweise unterbrochen sein kann.

Das Rastelement ist von vorne gesehen vorzugsweise hinter dem Innengewinde angeordnet und bildet das hintere Ende des Aufnahmeraums.

Vorzugsweise ist zwischen der Nut und dem Schnappelement Spiel in Richtung der Mittelachse vorhanden, derart, dass beim Einschieben des zweiten Rohrabschnittes die Überwurfmutter durch einen Kontakt des zweiten Rohrabschnittes am Sicherungselement verschoben wird, so dass der zweite Rohrabschnitt in Dichtwirkung mit dem Dichtelement kommt, und dass beim Verschrauben der Überwurfmutter mit dem Aussengewinde die Überwurfmutter zum zweiten Rohrabschnitt hin verschoben wird.

Vorzugsweise ist der erste Rohrstutzen zur festen Verbindung mit dem ersten Rohrabschnitt ausgebildet ist. Besonders bevorzugt ist am ersten Rohrstutzen eine plastische verformbare Klemme angeordnet, mit welcher der Rohrabschnitt fest zum Rohrstutzen geklemmt werden kann.

Vorzugsweise ist der erste Rohrstutzen und der zweite Rohrstutzen durch einen Flansch getrennt, wobei der Durchmesser des Flansches grösser als der Durchmesser des ersten und des zweiten Rohrstutzens ist. Der Flansch kann beispielsweise als Anschlag dienen.

Vorzugsweise sind das Dichtelement und das Sicherungselement im Querschnitt durch die Mittelachse des zweiten Rohrstutzens gesehen im verschraubten Zustand gegenüber einander angeordnet. Im verschraubten Zustand ist die Schraubverbindung zwischen Innengewinde und Aussengewinde vollständig hergestellt. Insbesondere greift das Aussengewinde dann in das Sicherungselement ein.

Vorzugsweise ist von der Stirnseite des zweiten Rohrstutzens gesehen vor dem Innengewinde eine konische Einführfläche angeordnet.

Eine Anordnung umfassend ein Fitting nach obiger Beschreibung und ein den zweiten Rohrabschnitt bereitstellendes Rohr, wobei der zweite Rohrabschnitt ein Aussengewinde aufweist, welches mit dem Innengewinde der Überwurfmutter in Eingriff bringbar ist und wobei der zweite Rohrabschnitt innenseitig weiterhin eine Dichtfläche aufweist, welche mit dem Dichtelement des zweiten Rohrstutzens zusammenarbeitet.

Vorzugsweise liegt im verschraubten Zustand die Dichtfläche und das Aussengewinde im Querschnitt gesehen gegenüber einander liegen. Insbesondere erstreckt sich die Dichtfläche mindestens teilweise in den Bereich des Aussengewindes .

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittdarstellung eines Fittings nach einer Ausführungsform der vorliegenden Erfindung;
- Fig. 2: eine Explosionsansicht des Fittings nach Figur 1;
- Fig. 3: eine Frontansicht des Fittings nach Figur 1;
- Fig. 4: eine Schnittdarstellung einer Anordnung umfassen den Fitting nach den Figuren 1 bis 3 im beinahe fertig montierten Zustand; und
- Fig. 5: eine Schnittdarstellung einer Anordnung umfassen den Fitting nach den Figuren 1 bis 3 vor einer Fehlmontage.

### BESCHREIBUNG BEVORZUGTER AUSFÜHRUNGSFORMEN

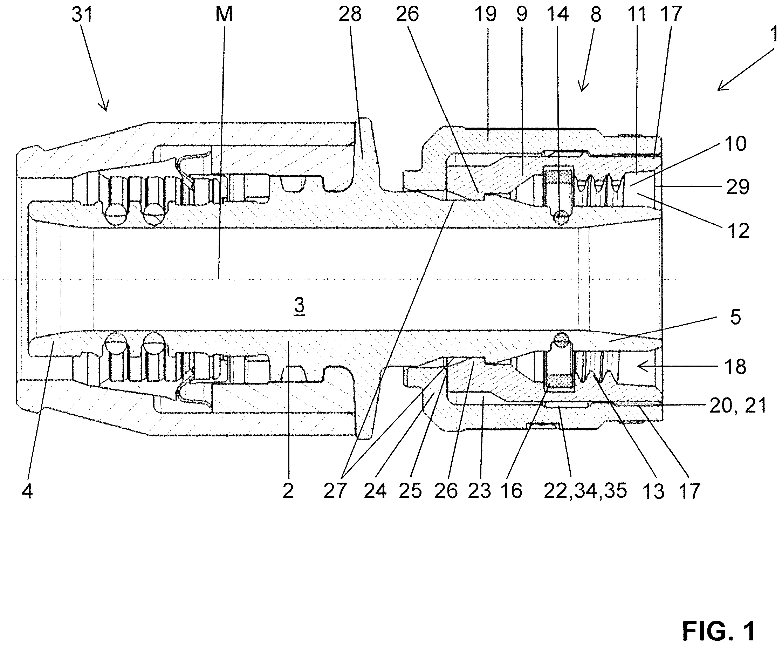

In den Figuren 1 bis 3 werden verschiedene Ansichten eines Fittings 1 nach einer Ausführungsform der vorliegenden Erfindung gezeigt. Der Fitting 1 der Verbindung von zwei Rohrabschnitten 6, welche Teil eines Rohrs oder eines Anschlussfittings, wie beispielsweise eines T-Stücks oder eines Winkelstücks, sein können.

Der Fitting 1 umfasst einen Fittingkörper 2 mit einem Fluiddurchgang 3, einen ersten Rohrstutzen 4 zum Anschluss eines ersten Rohrabschnittes und einen zweiten Rohrstutzen 5 zum Anschluss eines zweiten Rohrabschnittes 6, der ein Aussengewinde 7 aufweist, und eine am zweiten Rohrstutzen 5 angeordnete Kupplungseinheit 8 zur lösbaren Verbindung des zweiten Rohrabschnittes 5 mit dem zweiten Rohrstutzen 5. Durch den Fluiddurchgang 3 kann ein Fluid, wie beispielsweise Wasser, hindurchströmen.

Weiter umfasst der Fittingköper 2 in der gezeigten Ausführungsform am ersten Rohrstutzen 4 angeordnete Klemmelemente 31, mit welchen eine Klemmverbindung mit dem ersten Rohrabschnitt 38 bereitgestellt werden kann. Die Klemmelemente 31 können aber auch anders ausgebildet sein.

Die Kupplungseinheit 8 umfasst eine am Fittingkörper 2 verschwenkbar gelagerte Überwurfmutter 9 mit einem zylindrischen Innenraum 10. Der zylindrische Innenraum 10 wird durch eine Innenfläche 11 begrenzt. Der Innenraum 10 umgibt dabei den zweiten Rohrstutzen 5 derart, dass zwischen dem Innenraum 10 und dem Rohrstutzen 5 ein Aufnahmeraum 12 geschaffen wird. Der Aufnahmeraum 12 dient der Aufnahme des zu verbindenden zweiten Rohrabschnittes 5. An der Innenfläche 11 der Überwurfmutter 9 ist ein Innengewinde 13 angeordnet. Mit dem Innengewinde 13 kann die Überwurfmutter 9 mit dem Aussengewinde 7 des zweiten Rohrabschnittes 6 in Eingriff gebracht werden. Hierdurch kann der zweite Rohrabschnitt 6 mechanisch zum zweiten Rohrstutzen 5 gesichert werden.

Auf dem zweiten Rohrabschnitt 5 ist aussenseitig ein Dichtelement 14 angeordnet. Das Dichtelement 14 wirkt zusammen mit der Innenseite 15 des zweiten Rohrabschnittes 6. Mit dem Dichtelement 14 kann eine dichte Verbindung zwischen dem zweiten Rohrabschnitt 6 und dem zweiten Rohrstutzen 5 geschaffen werden.

Weiter umfasst die Kupplungseinheit 8 ein Element ausgewählt aus der Gruppe von:
- einem Sicherungselement 16, welches eine Drehhemmung zwischen dem zweiten Rohrabschnitt 6 und der Überwurfmutter 9 gegen eine Lösebewegung der Überwurfmutter 9 bereitstellt; und/oder
- einem Drehmomentbegrenzungselement 17, welches das auf die Überwurfmutter 9 während der Montage aufgebrachte Drehmoment begrenzt.

In der gezeigten Ausführungsform sind beide Elemente, also das Sicherungselement 16 und das Drehmomentbegrenzungselement 17 angeordnet. Es wäre aber auch denkbar, dass nur eines der beiden Elemente angeordnet ist.

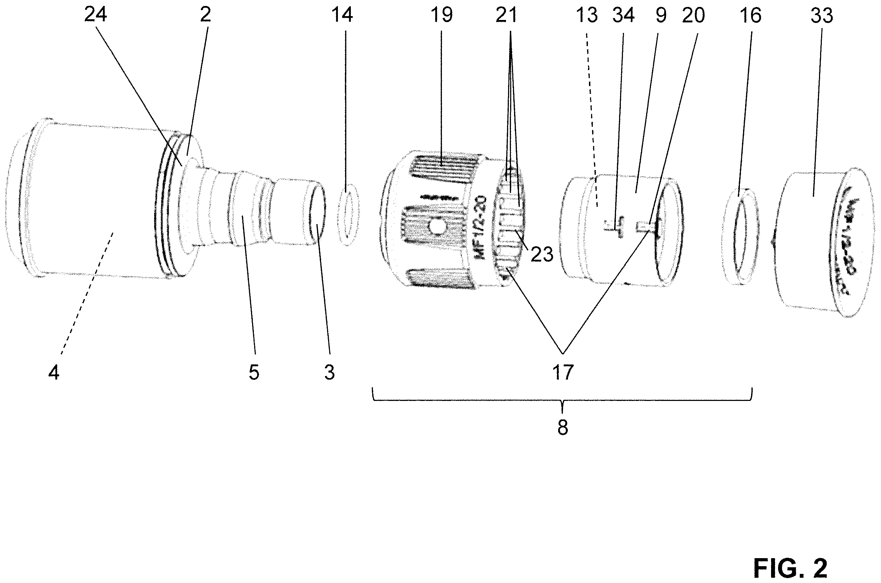

In der Figur 2 wird eine Explosionsdarstellung der Kupplungseinheit 8 gezeigt. Hier können die einzelnen Elemente besonders gut erkannt werden. In der gezeigten Ausführungsform umfasst die Kupplungseinheit 8 weiterhin einen Antriebsring 19. Über den Antriebsring 19 kann die Drehbewegung für die Montage bzw. Demontage auf die Überwurfmutter 9 gebracht werden. Zwischen dem Antriebsring 19 und der Überwurfmutter 9 ist, wie weiter unten beschrieben wird, das Drehmomentbegrenzungselement 17 angeordnet. In der gezeigten Ausführungsform ist im Antriebsring 19 die Überwurfmutter 9 entsprechend gelagert. Das Dichtelement 14 liegt am zweiten Rohrstutzen 5 auf und das Sicherungselement 16 ist im Inneren der Überwurfmutter 9 entsprechend gelagert. Die gesamte Kupplungseinheit bzw. der zweite Rohrstutzen 5 können weiter durch eine optionale Schutzkappe 33, welche stirnseitig aufgesetzt werden kann, geschützt werden.

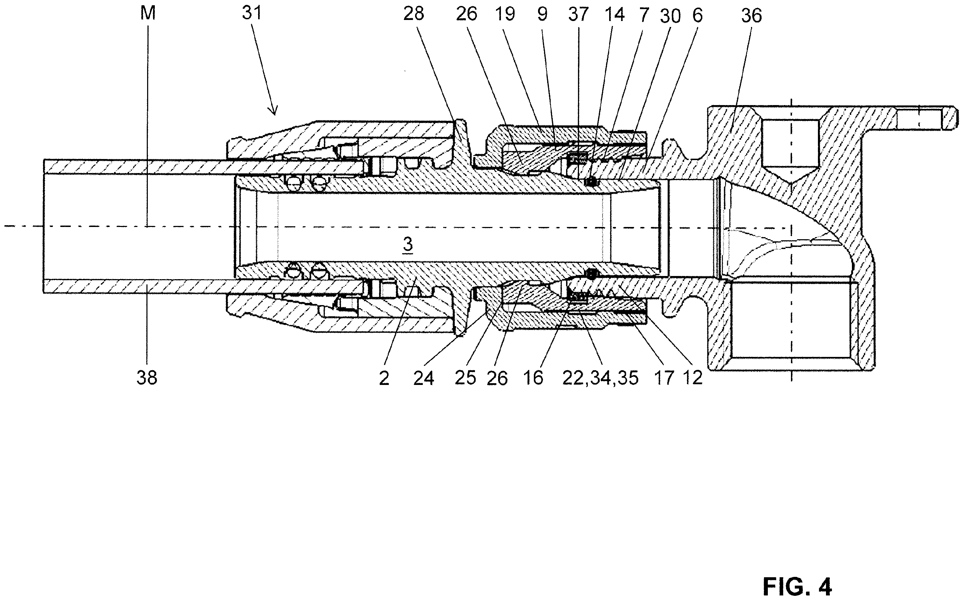

Das Sicherungselement 16 ist ein an der Überwurfmutter 9 gelagertes Element aus Kunststoff oder aus Gummi. Dabei ist der zweite Rohrabschnitt 6 in Kontakt mit dem Sicherungselement 6 bringbar. Das Sicherungselement 16 ist in einer Aufnahmenut 18 an der Überwurfmutter 9 gelagert. Die Aufnahmenut 18 erstreckt sich dabei von der Innenfläche 11 in die Überwurfmutter 9 hinein. Das Sicherungselement 16 ragt aus der Ausnahmenut 18 in Richtung Aufnahmeraum 12 hinaus. In der Figur 4 wird sodann der Kontakt zwischen dem Sicherungselement 16 und dem zweiten Rohrabschnitt 6 genauer gezeigt. Der zweite Rohrabschnitt 6 ragt dabei in den Aufnahmeraum 12 zwischen Überwurfmutter 9 und dem zweiten Rohrstutzen 6 ein und kommt in Kontakt mit dem Sicherungselement 16. In der gezeigten Ausführungsform greift bei vollständig hergestellter Schraubverbindung zwischen Innengewinde 13 und Aussengewinde 7 das Aussengewinde 7 in das Sicherungselement 16 ein. Das heisst, das Aussengewinde 7 schneidet sich in das Sicherungselement 16 ein. Hierdurch wird die Reibung zwischen Kupplungseinheit 8 und dem zweiten Rohrabschnitt 6 entsprechend erhöht und ein Lösen der Überwurfmutter 9 wird erschwert.

Vorzugsweise liegt das Sicherungselement 16 in seiner Ausgangslage, wie in der Figur 1 gezeigt, mit leichtem Spiel in der Aufnahmenut 18. Hierdurch kann sich das Sicherungselement 16 insbesondere radial, also quer zur Mittelachse M des zweiten Rohrstutzes 5 bewegen. Dieses Spiel ist bei der Montage vorteilhaft. In achsialer Richtung kann ebenfalls leichtes Spiel vorgesehen sein. Das Sicherungselement 16 ist dabei derart positioniert und ausgebildet, dass das Aussengewinde 7 des zweiten Rohrabschnittes 6 mit dem Sicherungselement in Kontakt bringbar ist. Das Sicherungselement 16 liegt also derart, dass es bei vollständiger Montage mit dem Aussengewinde 7 des zweiten Rohrabschnittes 6 in Kontakt kommt.

In der gezeigten Ausführungsform ist das Sicherungselement 16 ein Flachring mit einem rechteckigen Querschnitt. Die Aufnahmenut 18 weist ebenfalls einen rechteckigen Querschnitt auf.

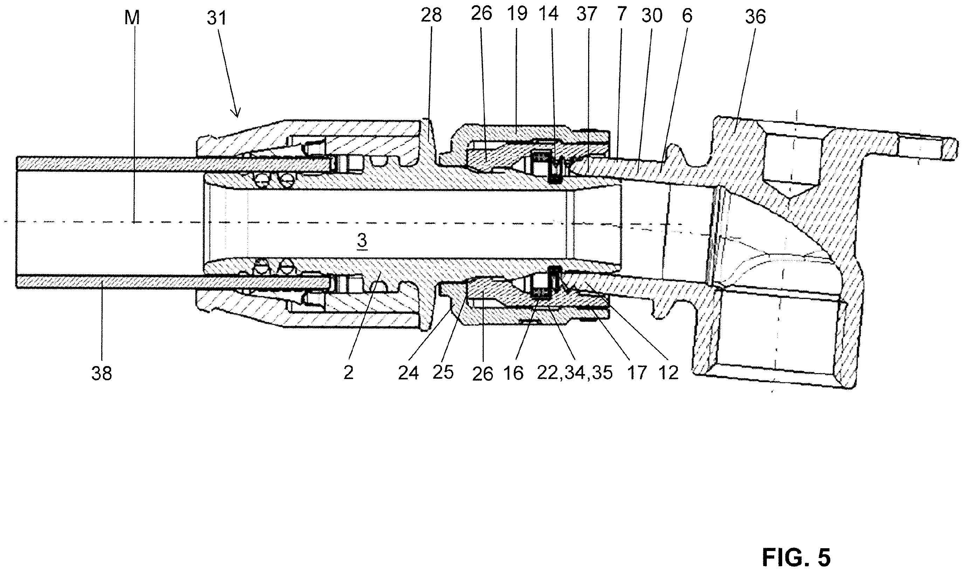

Wie bereits erläutert umfasst die Kupplungseinheit 8 in der gezeigten Ausführungsform einen Antriebsring 19, welcher aussenseitig an der Überwurfmutter 9 angeordnet ist. Das Drehmomentbegrenzungselement 17 ist dabei zwischen dem Antriebsring 19 und der Überwurfmutter 9 angeordnet. Eine Drehbewegung des Antriebsring 19 ist dabei mit dem Drehmomentbegrenzungselement 17 auf die Überwurfmutter 9 übertragbar. Das Drehmomentbegrenzungselement 17 hat viele verschiedene Vorteile. Besonders hat das Drehmomentbegrenzungselement 17 den Vorteil, dass zu Beginn der Montage allfällig erhöhte Drehmomente abgefangen werden können. Eine entsprechende Konfiguration wird in der Figur 5 gezeigt. Hier steht der zweite Rohrabschnitt 6 winklig geneigt zum Winkel des zweiten Rohrstutzens 5. Es kommt also zu einer Verkantung zwischen Rohrstutzen 5 und Rohrabschnitt 6. Beim Drehen des Antriebsring 19 und der Überwurfmutter 9 wären erhöhte Kräfte nötig, um das Aussengewinde 7 mit dem Innengewinde 13 zu verbinden. Eine solche Verbindung wäre aber negativ, weil es nicht zu einer Dichtwirkung kommen könnte. Zudem würden die beiden Gewinde 7, 13 deformiert werden. Bei einer Verkantung wird hier also das Drehmomentbegrenzungselement 17 entsprechend ausgelöst und der Installateur kann bei grosser Kraftanwendung die Verbindung nicht herstellen.

Ein weiterer Vorteil ergeht bei Erreichen der in Figur 4 gezeigten Position. Sobald die Verbindung derart ausgebildet ist, dass der zweite Rohrabschnitt 6 genügend tief in den Aufnahmeraum 12 einragt, so dass die Dichtfläche 30 in Kontakt mit dem Dichtelement 14 kommt, ist ein weiteres Anziehen ebenfalls nicht mehr nötig. Hier kommt dann zudem das Aussengewinde 17 in Kontakt mit dem Sicherungselement 16, was das Anziehdrehmoment erhöhen lässt. Auch hier löst dann das Drehmomentbegrenzungselement 17 entsprechend aus, so dass es nicht zu einer grossen Kraftanwendung auf die Verbindung insgesamt kommen kann.

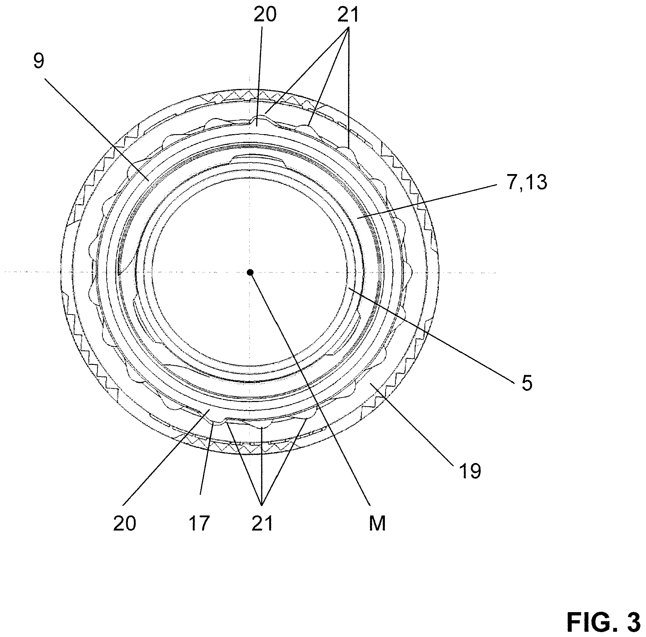

Von den Figuren 2 und 3 kann erkannt werden, dass das Drehmomentbegrenzungselement 17 in der gezeigten Ausführungsform durch aussenseitig an der Überwurfmutter 9 und innenseitig am Antriebsring 19 angeordnete Rasterhebungen 20 und Rastausnehmungen 21, in welche die Rasterhebungen 20 eingreifen, bereitgestellt wird. In der gezeigten Ausführungsform sind die Rasterhebungen 20 an der Überwurfmutter 9 angeordnet und die Rastausnehmungen 21 liegen am Antriebsring 19. Die Form und die Zahl der Rasterhebungen 20 bzw. Rastausnehmungen 21 definieren das entsprechende Drehmoment. In der gezeigten Ausführungsform weisen die Rasterhebungen 20 und die Rastausnehmungen 21 eine asymmetrische Struktur auf. Dies kann in der Frontansicht der Figur 3 gut erkannt werden. Durch diese unterschiedliche Ausbildung kann ein unterschiedliches Drehmoment für die Löse- bzw. die Anziehbewegung definiert werden. In der gezeigten Ausführungsform sind im Wesentlichen zwei einander gegenüberliegend angeordnete Rasterhebungen 20 vorhanden und eine Vielzahl von Rastausnehmungen 21. Die Rastausnehmungen 21 sind in gleichmässigen Abständen um den Umfang verteilt angeordnet.

Der Antriebsring 19 weist einen zylindrischen Hohlraum 23 auf. Im Hohlraum 23 ist die Überwurfmutter 9 entsprechend gelagert. Der Hohlraum 23 ist hier derart ausgebildet, dass die Überwurfmutter 9 im Wesentlichen vollständig im Hohlraum 23 liegt. Rückseitig weist der Hohlraum 23 einen Flanschabschnitt 24 auf, welcher den Hohlraum 23 nach hinten hin begrenzt. Der Flanschabschnitt 24 liegt an einer Anschlagsfläche 25 an der Überwurfmutter 9 an.

Weiter ist zwischen Antriebsring 19 und der Überwurfmutter 9 eine Raststruktur 22 vorhanden. Die Raststruktur 22 ist in der gezeigten Ausführungsform derart ausgebildet, dass eine Verdrehung zwischen Antriebsring 19 und der Überwurfmutter 9 möglich ist. Das heisst, die Raststruktur 22 stellt bezüglich eine Verdrehung keinen Widerstand entgegen. Eine Verschiebung zwischen Antriebsring 19 und Überwurfmutter 9 in Richtung der Mittelachse M des zweiten Rohrstutzens 5 wird aber durch die Raststruktur 22 verhindert. Die Raststruktur 22 umfasst in der gezeigten Ausführungsform eine Rasterhebung 34, welche in eine Nut 35 eingreift. Die Rasterhebung 34 ist an der Überwurfmutter 9 angeordnet und die Nut 35 liegt an dem Antriebsring 19. Bei einem Einschieben der Überwurfmutter 9 in den Hohlraum 23 des Antriebsrings 21, greift die Rasterhebung 34 in die Nut 35 entsprechend ein.

In der Figur 4 wird die relative Stellung zwischen Überwurfmutter 9, dem zweiten Rohrstutzen 5 und dem zweiten Rohrabschnitt 6 gezeigt. Die Überwurfmutter 9 ist über Schnappelemente 26 in einer Nut 27 am Rohrstutzen 5 gelagert. Zwischen Nut 27 und den Schnappelementen 26 ist Spiel vorhanden. Dabei wird bei Einschieben des zweiten Rohrabschnittes 6 in den Aufnahmeraum 12 durch den Kontakt zwischen dem zweiten Rohrabschnitt 6 und dem Sicherungselement 16 die Überwurfmutter 9 in Einschubrichtung nach hinten geschoben. Bei einer Betätigung der Überwurfmutter 9 greift deren Innengewinde 13 in das Aussengewinde 7 ein, wodurch die Überwurfmutter 9 innerhalb des Spiels wieder gegen den zweiten Rohrabschnitt 6 geschoben wird. Hierdurch wird sichergestellt, dass der zweite Rohrabschnitt 6 vergleichsweise tief in den Aufnahmeraum 12 eingeschoben wird, so dass die Dichtfläche 30 sicher mit dem Dichtelement 14 in Kontakt kommen kann.

In der gezeigten Ausführungsform ist der zweite Rohrabschnitt 6 Teil eines Rohrelementes 36, hier eines weiteren Anschlussfittings in der Form eines Winkelstückes. Der zweite Rohrabschnitt 6 kann aber auch Teil eines Rohrs sein. Für die Verbindung mit der Kupplungseinheit 8 weist der zweite Rohrabschnitt 6, wie bereits erwähnt, ein Aussengewinde 7 auf, welches mit dem Innengewinde 13 der Überwurfmutter in Eingriff bringbar ist. Der zweite Rohrabschnitt 6 weist innenseitig eine Dichtfläche 30 auf, welche mit dem Dichtelement 14 des zweiten Rohrstutzens 5 zusammenarbeitet.

In der gezeigten Ausführungsform weist der zweite Rohrabschnitt 6 weiterhin eine vordere Führungsfläche 37 auf. Mit der Führungsfläche 37 kommt der zweite Rohrabschnitt 6 in Kontakt mit einer konischen Einführfläche 29, welche auf Seiten der Überwurfmutter 9 vor dem Innengewinde 13 angeordnet ist. Über die Führungsfläche 37 und die konische Einführfläche 29 kann eine erste Zentrierung erreicht werden.

**BEZUGSZEICHENLISTE**

| | | | |
|---|---|---|---|
| 1 | Fitting | 21 | Rastausnehmung |
| 2 | Fittingkörper | 22 | Raststruktur |
| 3 | Fluiddurchgang | 23 | Hohlraum |
| 4 | erster Rohrstutzen | 24 | Flanschabschnitt |
| 5 | zweiter Rohrstutzen | 25 | Anschlagsabschnitt |
| 6 | zweiter Rohrabschnitt | 26 | Schnappelement |
| 7 | Aussengewinde | 27 | Nut |
| 8 | Kupplungseinheit | 28 | Flansch |
| 9 | Überwurfmutter | 29 | konische Einführfläche |
| 10 | Innenraum | 30 | Dichtfläche |
| 11 | Innenfläche | 31 | Klemmelemente |
| 12 | Aufnahmeraum | 33 | Schutzkappe |
| 13 | Innengewinde | 34 | Rasterhebung |
| 14 | Dichtelement | 35 | Nut |
| 15 | Innenseite | 36 | Rohrelement |
| 16 | Sicherungselement | 37 | Führungsfläche |
| 17 | Drehmomentbegrenzungs- elemen | 38 | erster Rohrabschnitt |
| | | M | Mittelachse |
| 18 | Aufnahmenut | | |
| 19 | Antriebsring | | |
| 20 | Rasterhebung | | |

## Patentansprüche

1. Fitting (1) umfassend
einen Fittingkörper (2) mit einem Fluiddurchgang (3), einem ersten Rohrstutzen (4) zum Anschluss eines ersten Rohrabschnittes und einem zweiten Rohrstutzen (5) zum Anschluss eines zweiten Rohrabschnittes (6) mit einem Aussengewinde (7) und
eine am zweiten Rohrstutzen (5) angeordnete Kupplungseinheit (8) zur lösbaren Verbindung des zweiten Rohrabschnittes (6) mit dem zweiten Rohrstutzen (5),
wobei die Kupplungseinheit (8) eine am Fittingkörper (2) verschwenkbar gelagerte Überwurfmutter (9) mit einem zylindrischen Innenraum (10), der durch eine Innenfläche (11) begrenzt ist, umfasst, wobei der Innenraum (10) den zweiten Rohrstutzen (5) derart umgibt, dass zwischen Innenraum (10) und Rohrstutzen (5) ein Aufnahmeraum (12) geschaffen wird, in welchen der zu verbindende zweite Rohrabschnitt (5) aufnehmbar ist,
wobei an der Innenfläche (11) ein Innengewinde (13) angeordnet ist, welches mit dem Aussengewinde (7) des zweiten Rohrabschnittes (6) in Eingriff bringbar ist, und
wobei auf dem zweiten Rohrstutzen (5) aussenseitig ein Dichtelement (14) angeordnet ist, welches mit der Innenseite (15) des zweiten Rohrabschnittes (6) zusammenwirkt,
wobei die Kupplungseinheit (8) ein Sicherungselement (16), mit welchem eine Drehhemmung zwischen dem zweiten Rohrabschnitt (6) und der Überwurfmutter (9) gegen eine Lösebewegung der Überwurfmutter (9) bereitstellbar ist, umfasst, **dadurch gekennzeichnet, dass** die Kupplungseinheit weiter ein Drehmomentbegrenzungselement (17), welches das auf die Überwurfmutter (9) während der Montage aufgebrachte Drehmoment begrenzt, umfasst,
dass aussenseitig an der Überwurfmutter (9) ein Antriebsring (19) angeordnet ist, wobei das Drehmomentbegrenzungselement (17) zwischen dem Antriebsring (19) und der Überwurfmutter (9) angeordnet ist, und wobei eine Drehbewegung des Antriebsrings (19) über das Drehmomentbegrenzungselement (17) auf die Überwurfmutter (9) übertragbar ist und
dass der Antriebsring (19) einen Hohlraum (23) aufweist, in welchem die Überwurfmutter (9) platziert ist, wobei der Hohlraum (23) derart ausgebildet ist, dass die Überwurfmutter (9) im Wesentlichen vollständig im Hohlraum (23) liegt.

2. Fitting (1) nach Anspruch 1, **dadurch gekennzeichnet, dass** das Sicherungselement (16) ein an der Überwurfmutter (9) gelagertes Element aus Kunststoff, insbesondere aus einem weichen Kunststoff, oder aus Gummi ist, wobei der zweite Rohrabschnitt (6) in Kontakt mit dem Sicherungselement (16) bringbar ist.

3. Fitting (1) nach einem der vorhergehenden Ansprüche, **dadurch gekennzeichnet, dass** das Sicherungselement (16) sich teilweise oder vollständig um den zweiten Rohrstutzen (5) bzw. um den Innenraum (10) herum erstreckt.

4. Fitting (1) nach einem der vorhergehenden Ansprüche, **dadurch gekennzeichnet, dass** das Sicherungselement (16) in einer sich von der Innenfläche (11) in die Überwurfmutter (9) hineinerstrecken Aufnahmenut (18) angeordnet ist, wobei das Sicherungselement (16) aus der Aufnahmenut (18) in Richtung Aufnahmeraum (12) herausragt; und/oder wobei das Sicherungselement (16) in seiner Ausgangslage mit Spiel in der Aufnahmenut (18) liegt.

5. Fitting (1) nach einem der vorhergehenden Ansprüche, **dadurch gekennzeichnet, dass** das Sicherungselement (16) derart ausgebildet und positioniert ist, dass das Aussengewinde (7) des zweiten Rohrabschnittes (6) mit dem Sicherungselement (16) in Kontakt bringbar ist, bzw. in das Sicherungselement (16) eindrehbar ist.

6. Fitting (1) nach einem der vorhergehenden Ansprüche, **dadurch gekennzeichnet, dass** das Drehmomentbegrenzungselement (17) durch aussenseitig an der Überwurfmutter (9) und innenseitig am Antriebsring (19) angeordnete Rasterhebungen (20) und Rastausnehmungen (21), in welche die Rasterhebungen (20) eingreifen, bereitgestellt wird.

7. Fitting (1) nach Anspruch 6, **dadurch gekennzeichnet, dass** die Zahl der Rastausnehmungen (21) grösser ist als die Zahl der Rasterhebungen (20); oder dass die Zahl der Rasterhebungen (20) grösser ist als die Zahl der Rastausnehmungen (21).

8. Fitting (1) nach einem der vorhergehenden Ansprüche, **dadurch gekennzeichnet, dass** zwischen Antriebsring (19) und Überwurfmutter (9) eine Raststruktur (22) vorhanden ist, welche einer Verdrehung zwischen Antriebsring (19) und Überwurfmutter (9) keinen Widerstand entgegen stellt und welche einer Verschiebung zwischen Antriebsring (19) und Überwurfmutter (9) in Richtung der Mittelachse (M) des zweiten Rohrstutzens (5) einen Widerstand bereitstellt.

9. Fitting (1) nach einem der vorhergehenden Ansprüche, **dadurch gekennzeichnet, dass** der Hohlraum (23) rückseitig durch einen quer zum Hohlraum (23) verlaufenden Flanschabschnitt (24) begrenzt ist, welcher an einer Anschlagsfläche (25) an der Überwurfmutter (9) anliegt.

10. Fitting (1) nach einem der vorhergehenden Ansprüche, **dadurch gekennzeichnet, dass** die Überwurfmutter (9) mindestens ein Schnappelement (26) aufweist, welches in eine am zweiten Rohrstutzen (5) angeordnete und um den zweiten Rohrstutzen (5) umlaufende Nut (27) eingreift und über das Schnappelement (26) drehbar am zweiten Rohrstutzen (5) gelagert ist.

11. Fitting (1) nach Anspruch 10, **dadurch gekennzeichnet, dass** zwischen der Nut (27) und dem Schnappelement (26) in Richtung der Mittelachse Spiel vorhanden ist, derart, dass beim Einschieben des zweiten Rohrabschnittes (6) die Überwurfmutter (9) durch einen Kontakt des zweiten Rohrabschnittes (6) am Sicherungselement (16) verschoben wird, so dass der zweite Rohrabschnitt (6) in Dichtwirkung mit dem Dichtelement (14) kommt, und dass beim Verschrauben der Überwurfmutter (9) mit dem Aussengewinde (7) die Überwurfmutter (9) zum zweiten Rohrabschnitt (6) hin verschoben wird.

12. Fitting (1) nach einem der vorhergehenden Ansprüche, **dadurch gekennzeichnet, dass** der erste Rohrstutzen (4) zur festen Verbindung mit dem ersten Rohrabschnitt ausgebildet ist; und/oder dass der erste Rohrstutzen (4) und der zweite Rohrstutzen (5) durch einen Flansch (28) getrennt sind, wobei der Durchmesser des Flansches (28) grösser als der Durchmesser des ersten und des zweiten Rohrstutzens (4, 5) ist.

13. Fitting (1) nach einem der vorhergehenden Ansprüche, **dadurch gekennzeichnet, dass** das Dichtelement (14) und das Sicherungselement (16) im Querschnitt durch die Mittelachse des zweiten Rohrstutzens (5) gesehen im verschraubten Zustand gegenüber einander angeordnet sind; und/oder dass von der Stirnseite des zweiten Rohrstutzens (5) gesehen vor dem Innengewinde (13) eine konische Einführfläche (29) angeordnet ist.

14. Anordnung umfassend ein Fitting (1) nach einem der vorhergehenden Ansprüche und ein den zweiten Rohrabschnitt (6) bereitstellendes Rohrelement (36), wobei der zweite Rohrabschnitt (6) ein Aussengewinde (7) aufweist, welches mit dem Innengewinde (13) der Überwurfmutter (9) in Eingriff bringbar ist und wobei der zweite Rohrabschnitt (6) innenseitig weiterhin eine Dichtfläche (30) aufweist, welche mit dem Dichtelement (14) des zweiten Rohrstutzens (5) zusammenarbeitet.

15. Anordnung nach Anspruch 14, **dadurch gekennzeichnet, dass** im verschraubten Zustand die Dichtfläche (30) und das Aussengewinde (7) im Querschnitt gesehen gegenüber einander liegen; und/oder dass sich die Dichtfläche (30) mindestens teilweise in den Bereich des Aussengewindes (7) erstreckt.

## Claims

1. Fitting (1)
comprising a fitting body (2) having a fluid passage (3), a first pipe socket (4) for the connection of a first pipe portion and a second pipe socket (5) for the connection of a second pipe portion (6) with an external thread (7), and
also comprising a coupling unit (8), which is arranged on the second pipe socket (5) and is intended for releasably connecting the second pipe portion (6) to the second pipe socket (5),
wherein the coupling unit (8) comprises a union nut (9), which is pivotably mounted on the fitting body (2) and has a cylindrical interior space (10), which is delimited by an inner surface (11), wherein the interior space (10) encloses the second pipe socket (5) such that an accommodating space (12) is created between the interior space (10) and pipe socket (5), it being possible for the second pipe portion (5) which is to be connected to be accommodated in the accommodating space,
wherein the inner surface (11) has arranged on it an internal thread (13), which can be brought into engagement with the external thread (7) of the second pipe portion (6), and
wherein arranged on the outside of the second pipe socket (5) is a sealing element (14), which interacts with the inner side (15) of the second pipe portion (6),
wherein the coupling unit (8) comprises a securing element (16), which can provide rotary locking between the second pipe portion (6) and the union nut (9) to counter a release movement of the union nut (9), **characterized in that** the coupling unit further comprises a torque-limiting element (17), which limits the torque applied to the union nut (9) during assembly,
**in that** a drive ring (19) is arranged on the outside of the union nut (9), wherein the torque-limiting element (17) is arranged between the drive ring (19) and the union nut (9), and wherein a rotary movement of the drive ring (19) can be transmitted to the union nut (9) via the torque-limiting element (17), and
**in that** the drive ring (19) has a cavity (23), in which the union nut (9) is placed, wherein the cavity (23) is designed such that the union nut (9) is located essentially entirely in the cavity (23).

2. Fitting (1) according to Claim 1, **characterized in that** the securing element (16) is an element which is mounted on the union nut (9) and is made of plastic material, in particular of a soft plastic material, or of rubber, wherein the second pipe portion (6) can be brought into contact with the securing element (16).

3. Fitting (1) according to either of the preceding claims, **characterized in that** the securing element (16) extends in part or in full around the second pipe socket (5) or around the interior space (10).

4. Fitting (1) according to one of the preceding claims, **characterized in that** the securing element (16) is arranged in an accommodating groove (18), which extends from the inner surface (11) into the union nut (9), wherein the securing element (16) projects out of the accommodating groove (18) in the direction of the accommodating space (12); and/or wherein, in its starting position, the securing element (16) is located in the accommodating groove (18) with an amount of play.

5. Fitting (1) according to one of the preceding claims, **characterized in that** the securing element (16) is designed and positioned such that the external thread (7) of the second pipe portion (6) can be brought into contact with the securing element (16), and can be screwed into the securing element (16).

6. Fitting (1) according to one of the preceding claims, **characterized in that** the torque-limiting element (17) is provided by latching elevations (20), which are arranged on the outside of the union nut (9) and on the inside of the drive ring (19), and latching recesses (21), in which the latching elevations (20) engage.

7. Fitting (1) according to Claim 6, **characterized in that** the number of latching recesses (21) is greater than the number of latching elevations (20); or **in that** the number of latching elevations (20) is greater than the number of latching recesses (21).

8. Fitting (1) according to one of the preceding claims, **characterized by** the presence, between the drive ring (19) and union nut (9), of a latching structure (22), which does not provide any resistance to rotation between the drive ring (19) and union nut (9) and which provides resistance to displacement between the drive ring (19) and union nut (9) in the direction of the centre axis (M) of the second pipe socket (5).

9. Fitting (1) according to one of the preceding claims, **characterized in that** the cavity (23) is delimited on the rear side by a flange portion (24), which runs transversely in relation to the cavity (23) and butts against a stop surface (25) on the union nut (9).

10. Fitting (1) according to one of the preceding claims, **characterized in that** the union nut (9) has at least one snap-fit element (26), the latter engaging in a groove (27) arranged on the second pipe socket (5) and running around the second pipe socket (5), and is rotatably mounted on the second pipe socket (5) via the snap-fit element (26).

11. Fitting (1) according to Claim 10, **characterized in that** an amount of play is present between the groove (27) and the snap-fit element (26) in the direction of the centre axis such that, when the second pipe portion (6) is being pushed in, the union nut (9) is displaced by contact of the second pipe portion (6) against the securing element (16), so that the second pipe portion (6) undergoes sealing action with the sealing element (14), and that, when the union nut (9) is being screw-connected to the external thread (7), the union nut (9) is displaced in the direction of the second pipe portion (6).

12. Fitting (1) according to one of the preceding claims, **characterized in that** the first pipe socket (4) is designed for fixed connection to the first pipe portion; and/or **in that** the first pipe socket (4) and the second pipe socket (5) are separated by a flange (28), wherein the diameter of the flange (28) is greater than the diameter of the first and second pipe sockets (4, 5).

13. Fitting (1) according to one of the preceding claims, **characterized in that**, in the screw-connected state, the sealing element (14) and the securing element (16), as seen in cross section through the centre axis of the second pipe socket (5), are arranged opposite one another; and/or **in that**, as seen from the end side of the second pipe socket (5), a conical insertion surface (29) is arranged in front of the internal thread (13).

14. Arrangement comprising a fitting (1) according to one of the preceding claims and a pipe element (36), which provides the second pipe portion (6), wherein the second pipe portion (6) has an external thread (7), which can be brought into engagement with the internal thread (13) of the union nut (9), and wherein the second pipe portion (6) also has, on the inside, a sealing surface (30), which interacts with the sealing element (14) of the second pipe socket (5).

15. Arrangement according to Claim 14, **characterized in that**, in the screw-connected state, the sealing surface (30) and the external thread (7), as seen in cross section, are located opposite one another; and/or **in that** at least part of the sealing surface (30) extends into the region of the external thread (7).

## Revendications

1. Raccord (1) comprenant
un corps de raccord (2) pourvu d'un passage de fluide (3), d'un premier piquage de tube (4) destiné au raccordement d'une première portion de tube et d'un deuxième piquage de tube (5) destiné au raccordement d'une deuxième portion de tube (6) munie d'un filetage extérieur (7) et
une unité d'accouplement (8) disposée au niveau du deuxième piquage de tube (5) et destinée à relier de manière amovible la deuxième portion de tube (6) au deuxième piquage de tube (5),
l'unité d'accouplement (8) comprenant un écrou d'accouplement (9) qui est monté de manière pivotante sur le corps de raccord (2) et qui comporte un espace intérieur cylindrique (10) qui est délimité par une surface intérieure (11), l'espace intérieur (10) entourant le deuxième piquage de tube (5) de manière à ménager entre l'espace intérieur (10) et le piquage de tube (5) un espace de réception (12) dans lequel peut être reçue la deuxième portion de tube (5) à relier,
un filetage intérieur (13), qui peut être amené en engagement avec le filetage extérieur (7) de la deuxième portion de tube (6), étant disposé sur la surface intérieure (11), et
un élément d'étanchéité (14), qui coopère avec le côté intérieur (15) de la deuxième portion de tube (6), étant disposé sur le deuxième piquage de tube (5) du côté extérieur,
l'unité d'accouplement (8) comprenant un élément de sécurité (16) permettant un blocage en rotation entre la deuxième portion de tube (6) et l'écrou accouplement (9) afin d'empêcher un mouvement de desserrage de l'écrou d'accouplement (9),
**caractérisé en ce que**
l'unité d'accouplement comprend en outre un élément de limitation de couple (17) qui limite le couple appliqué à l'écrou d'accouplement (9) lors du montage,
une bague d'entraînement (19) est disposée sur le côté extérieur de l'écrou d'accouplement (9), l'élément de limitation de couple (17) étant disposé entre la bague d'entraînement (19) et l'écrou d'accouplement (9), et un mouvement de rotation de la bague d'entraînement (19) pouvant être transmis à l'écrou d'accouplement (9) par le biais de l'élément de limitation de couple (17) et
la bague d'entraînement (19) comporte une cavité (23) dans laquelle est placé l'écrou d'accouplement (9), la cavité (23) étant formée de manière à ce que l'écrou d'accouplement (9) soit situé sensiblement complètement dans la cavité (23).

2. Raccord (1) selon la revendication 1, **caractérisé en ce que** l'élément de sécurité (16) est un élément en matière synthétique, notamment en matière synthétique souple, ou en caoutchouc, qui est monté sur l'écrou d'accouplement (9), la deuxième portion de tube (6) pouvant être amenée en contact avec l'élément de sécurité (16).

3. Raccord (1) selon l'une des revendications précédentes, **caractérisé en ce que** l'élément de sécurité (16) s'étend partiellement ou totalement autour du deuxième piquage de tube (5) ou autour de l'espace intérieur (10).

4. Raccord (1) selon l'une des revendications précédentes, **caractérisé en ce que** l'élément de sécurité (16) est disposé dans une rainure de réception (18) qui s'étend de la surface intérieure (11) jusque dans l'écrou d'accouplement (9), l'élément de sécurité (16) faisant saillie de la rainure de réception (18) en direction de l'espace de réception (12) ; et/ou l'élément de sécurité (16) étant situé dans sa position initiale avec jeu dans la rainure de réception (18).

5. Raccord (1) selon l'une des revendications précédentes, **caractérisé en ce que** l'élément de sécurité (16) est conçu et positionné de manière à ce que le filetage extérieur (7) de la deuxième portion de tube (6) puisse être amené en contact avec l'élément de sécurité (16) ou puisse être vissé dans l'élément de sécurité (16).

6. Raccord (1) selon l'une des revendications précédentes, **caractérisé en ce que** l'élément de limitation de couple (17) est pourvu de saillies d'encliquetage (20), qui sont disposées du côté extérieur de l'écrou d'accouplement (9) et du côté intérieur de la bague d'entraînement (19), et d'évidements d'encliquetage (21) dans lesquels s'engagent les saillies d'encliquetage (20).

7. Raccord (1) selon la revendication 6, **caractérisé en ce que** le nombre d'évidements d'encliquetage (21) est supérieur au nombre de saillies d'encliquetage (20) ; ou **en ce que** le nombre de saillies d'encliquetage (20) est supérieur au nombre d'évidements d'encliquetage (21).

8. Raccord (1) selon l'une des revendications précédentes, **caractérisé en ce qu'**une structure d'encliquetage (22) est prévue entre la bague d'entraînement (19) et l'écrou d'accouplement (9), laquelle deuxième structure n'oppose pas de résistance à une torsion entre la bague d'entraînement (19) et l'écrou d'accouplement (9) et qui oppose une résistance au coulissement entre la bague d'entraînement (19) et l'écrou d'accouplement (9) en direction de l'axe central (M) du deuxième piquage de tube (5).

9. Raccord (1) selon l'une des revendications précédentes, **caractérisé en ce que** la cavité (23) est délimitée du côté arrière par une portion formant bride (24) qui s'étend transversalement à la cavité (23) et qui vient en appui sur une surface de butée (25) de l'écrou d'accouplement (9).

10. Raccord (1) selon l'une des revendications précédentes, **caractérisé en ce que** l'écrou d'accouplement (9) comporte au moins un élément d'enclenchement (26) qui s'engage dans une rainure (27), ménagée au niveau du deuxième piquage de tube (5) et s'étendant autour du deuxième piquage de tube (5), et qui est monté de manière rotative au niveau du deuxième piquage de tube (5) par le biais de l'élément d'enclenchement (26).

11. Raccord (1) selon la revendication 10, **caractérisé en ce qu'**un jeu est prévu entre la rainure (27) et l'élément d'enclenchement (26) en direction de l'axe central de manière à déplacer l'écrou d'accouplement (9) par contact de la deuxième portion de tube (6) sur l'élément de sécurité (16), lorsque la deuxième portion de tube (6) est introduite, de sorte que la deuxième portion de tube (6) entre en contact étanche avec l'élément d'étanchéité (14) et à déplacer l'écrou d'accouplement (9) vers la deuxième portion de tube (6) lorsque l'écrou d'accouplement (9) est vissé sur le filetage extérieur (7).

12. Raccord (1) selon l'une des revendications précédentes, **caractérisé en ce que** le premier piquage de tube (4) est conçu pour réaliser une liaison fixe avec la première portion de tube ; et/ou **en ce que** le premier piquage de tube (4) et le deuxième piquage de tube (5) sont séparés par une bride (28), le diamètre de la bride (28) étant supérieur au diamètre des premier et deuxième piquages de tube (4, 5).

13. Raccord (1) selon l'une des revendications précédentes, **caractérisé en ce que** l'élément d'étanchéité (14) et l'élément de sécurité (16) sont disposés en regard l'un à l'autre à l'état vissé dans une vue en coupe transversale passant par l'axe médian du deuxième piquage de tube (5) ; et/ou **en ce qu'**une surface d'insertion conique (29) est disposée devant le filetage intérieur (13) dans une vue depuis la face frontale du deuxième piquage de tube (5).

14. Ensemble comprenant un raccord (1) selon l'une des revendications précédentes et un élément tubulaire (36) constituant la deuxième portion de tube (6), la deuxième portion de tube (6) comportant un filetage extérieur (7) qui peut être amené en engagement avec le filetage intérieur (13) de l'écrou d'accouplement (9) et la deuxième portion de tube (6) comportant en outre du côté intérieur une surface d'étanchéité (30) qui coopère avec l'élément d'étanchéité (14) de la deuxième portion de tube (5).

15. Ensemble selon la revendication 14, **caractérisé en ce que** la surface d'étanchéité (30) et le filetage extérieur (7) sont situés en regard l'un à l'autre à l'état vissé ; et/ou **en ce que** la surface d'étanchéité (30) s'étend au moins partiellement dans la zone du filetage extérieur (7).
